# EUROPEAN PATENT SPECIFICATION

(11) **EP 2 366 322 B1**
(45) Date of publication and mention of the grant of the patent: **04.11.2015**
(21) Application number: 10002934.7
(22) Date of filing: 19.03.2010
(51) Int. Cl.: A47L 15/42

(54) **A method for regenerating a water softener resin in a dishwasher**
Verfahren zum Regenerieren eines Wasserenthärtungsharzes in einer Geschirrspülmaschine
Procédé de régénération de résine d'adoucissant de l'eau dans un lave-vaisselle

(30) Priority: 18.03.2010 SE 1000247; 18.03.2010 SE 1000248
(43) Date of publication of application: 21.09.2011
(73) Proprietor: Electrolux Home Products Corporation N.V., 1130 Brussels (BE)
(72) Inventor: Haider, Gerhard, 90429 Nürnberg (DE); Lundberg, Mats, 90429 Nürnberg (DE); Lampe, Hansjörg, 90491 Nürnberg (DE)
(74) Representative: Samzelius, Roger Mikael

(56) References cited:
- EP-A1- 0 094 357
- EP-A1- 0 685 198
- EP-A1- 1 842 478
- EP-A1- 1 905 339
- EP-A2- 0 779 056
- EP-A2- 1 023 868
- WO-A2-01/18298
- WO-A2-2007/049177
- DE-A1- 4 222 240
- GB-A- 1 283 681
- US-A1- 2004 236 522
- US-A1- 2005 178 406

## Description

The present invention relates to a method for regenerating a water softener resin in a dishwasher according to the preamble of claim 1.

In many cases the dishwasher requires a softener resin. It would be advantageous to rinse the softener resin in parallel with the activation of an inlet valve and a drain pump. The softener resin has to be regenerated from time to time. This is performed by filling salted water into the resin tank. The salted water remains therein for a defined time and then it is rinsed out.

However, the rinsing water is contaminated with a high concentration of hardness builder and some salt. The level of the rinsing water should be kept in the bottom of the dishwasher as low as possible in order to prevent that cavities of the dishwasher are filled with the rinsing water. The rinsing water should remain there after the rinse procedure. Further, the remaining rinsing water may cause problems in the next washing cycle, e.g. formation of layers due to chemical reactions of the components and salt.

It is not possible to measure the amount of the rinsing water by detecting the water level. Usually the rinsing is performed by one or more portions, wherein their amounts are measured by filling up to a defined level. Another method for measuring the amount of said portions is the detection of the time for filling. Further, a combination of both methods is possible. The filling by time may cause high uncertainties due to the tolerances in the inlet valve.

Since the draining of the drain pump is not even, e.g. when air is in the housing of the drain pump, and/or the path may be blocked, the flow rate of the inlet valve may exceed the flow rate of the drain pump, so that the water level becomes higher than the maximum uncritical level.

An improved method for regenerating a water softener resin in a dishwasher, overcoming the aforementioned problems is known from EP 1 905 339 A1.

According to this method the rinsing step comprises opening an inlet valve for mains water of the dishwasher for a predetermined opening period that is adapted for leading said predetermined volume of mains water over the softener resin.

Departing from this known method, the present invention aims at increasing the precision in the water filling of this rinsing step. In order to do so, the method comprises an initial calibration step for the mains inlet valve wherein said predetermined opening period of the inlet valve is calculated, and wherein the rinsing step comprises measuring the actual opening period of the inlet valve and closing the inlet valve when said predetermined opening period has been reached.

The calibration method is further defined in claim 1 and represents an improvement with respect to known ones, such as the one known from DE 42 22 240 A1 in that it makes use of a predetermined lower water level, instead of using the state in which the tank is presumably empy. This increases the precision of the calibration.

Further, the water level within a water-collecting sump in the bottom region of a wash chamber of the dishwasher may be measured by a pressure sensor and the opening of the inlet valve is interrupted when a predetermined threshold level is reached.

For example, the rinsing step comprises activating a drain pump of the dishwasher in parallel with the opening of the inlet valve.

During at least part of said rinsing step at least one of the open state of the inlet valve and/or the activity of the drain pump may be controlled to keep the liquid level in the dishwasher sump below a predetermined threshold level.

According to the present invention, said calibration step is preferably executed previously to said incubation step, wherein said calibration step comprises the subsequent sub-steps of:
- opening the inlet valve,
- detecting a first time when the water reaches a first predetermined lower water level within a sump of the dishwasher,
- detecting a subsequent second time when the water reaches a predetermined second higher water level within the sump,
- calculating the flow rate of the mains inlet valve on the basis of the difference between the second time and the first time and a known volume between said first water level and said second water level, and
- calculating said predetermined opening period of the inlet valve during the rinsing step that corresponds to said predetermined volume of rinsing water.

Thereby at least one, preferably both, of said first water level and/or said second water level may be detected by a pressure sensor.

In a special case, said threshold level corresponds to said first water level.

Preferably, said first water level may be adapted to keep the water in a lower region of the sump such that it is essentially kept outside of the wash chamber of the dishwasher.

At least at the beginning of the rinsing step the water that is led over the softener resin may be drained from the dishwasher sump essentially without entering the wash chamber.

Further, the open state of the inlet valve and/or the activity of the drain pump may be controlled on the basis of the signals provided by said pressure sensor.

For example, said pressure sensor is at least one pressure switch having a corresponding switch pressure or preferably wherein said pressure sensor is an analogue pressure sensor.

The inlet valve may be closed as soon as the threshold level, in particular said first water level is reached, in particular wherein the activity of the drain pump is continued while the inlet valve is closed.

Then, the inlet valve may be opened again after the water level in sump has fallen below the threshold level.

Further, the rinsing may be periodically interrupted by closing the inlet valve according to a predetermined time scheme, in particular wherein said time scheme is adapted to allow for the softener resin to restructure during interruption of the rinsing.

The present invention also relates to a computer program product stored on a computer usable medium, comprising computer readable program means for causing a computer to perform the method as described above.

Additionally, the present invention relates to a dishwasher comprising a program cycle comprising the method as described above. In a similar way, the present invention relates to a computer usable medium comprising said computer program.

Thereby, the dishwasher may comprise an inlet valve, a drain pump, at least one pressure sensor, preferably an analogue pressure sensor, and a control unit that is adapted to control the inlet valve and the drain pump during the rinsing step of said method for regenerating the softener resin on the basis of the signals issued by the pressure sensor.

Novel and inventive features of the present invention are set forth in the appended claims.

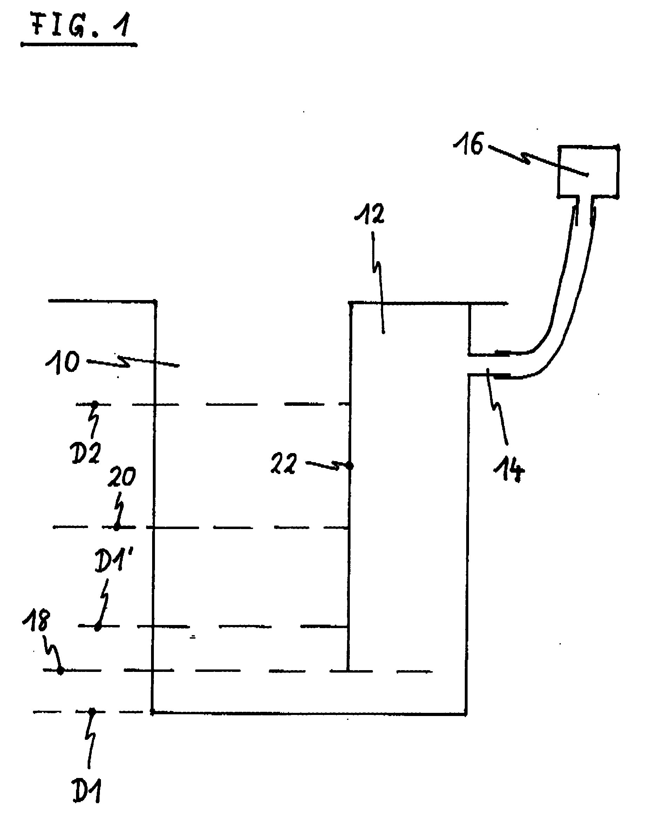

The present invention will be described in further detail by example of a preferred embodiment with reference to the accompanied drawing, in which
- FIG 1: illustrates a schematic side view of a dishwasher sump according to a preferred embodiment of the present invention.

FIG 1 illustrates a schematic side view of a dishwasher sump 10 according to a preferred embodiment of the present invention. The dishwasher sump 10 has an unvarying cross-section, i.e. the cross-section is independent of the height.

The dishwasher sump 10 comprises an air trap 12 formed as a chamber within said dishwasher sump 10. A diving wall 22 is arranged between the air trap 12 and the main space of the dishwasher sump 10. The upper portion of the air trap 12 is closed. The bottom side of the air trap 12 is open and forms a connection to the main part of the dishwasher sump 10. When the bottom side of the air trap 12 is closed be water, then air is enclosed within said air trap 12. The pressure of the air enclosed within the air trap 12 is homogeneous.

A connector 14 is formed at a side wall of the air trap 12. An analogue pressure sensor 16 is attached at the connector 14. The analogue pressure sensor 16 is provided to detect the air-pressure in the air trap 12. Since the air-pressure in the air trap 12 is homogeneous, the detected pressure by the analogue pressure sensor 16 is independent of the height at which the connector 14 is placed.

In an alternative embodiment of the present invention the dishwasher sump 10 may be formed without the air trap 12. In this case the analogue pressure sensor 16 has to be connected directly to the dishwasher sump 10, i.e. the connector 14 has to be placed at the side wall of the dishwasher sump 10.

Generally the analogue pressure sensor 16 is provided for detecting the pressure in the air or water. The pressure range of the analogue pressure sensor 16 can be adapted to the appliance. For the dishwasher the pressure range of the analogue pressure sensor 16 is preferably between 0 mmWc and about 200 mmWc (mm water column).

An output signal of the analogue pressure sensor 16 corresponds with a detected pressure value. For example, the output signal of the analogue pressure sensor 16 is defined by its voltage, current or frequency. The resolution of the analogue pressure sensor 16 can vary. In this the resolution of the analogue pressure sensor 20 should be 1 mmWc.

Unlike a conventional pressure switch as used in dishwashers the analogue pressure sensor 16 can recognize about 200 different water levels. In contrast, the conventional pressure switch triggers only on one predetermined pressure value. The output signal of the analogue pressure sensor 16 is treated and evaluated by an electronic control unit. Said electronic control unit controls the behaviour of the dishwasher in dependence of the detected pressure value.

In the dishwasher sump 10 several levels are defined. An assumed first water level D1 defines an empty state of the dishwasher sump 10. Since the first water level D1 is below the edge of the diving side wall, the first water level D1 cannot be measured. The use of the first water level D1 assumes that the dishwasher sump 10 is empty.

Above the first water level D1 a basis level 18 is defined. The basis level 18 corresponds with the lower edge of the diving wall 22. The basis level 18 is the lowest level detectable by the analogue pressure sensor 16.

A detectable first water level D1' is defined above the lower edge of the diving wall 22 and above the basis level 18. The detectable first water level D1' can be measured, since the water level is above the lower edge of the diving wall 22 and the bottom of the air trap 12 is closed by said water level.

A threshold level 20 is arranged above the level D1'. The threshold level 20 corresponds with the filled dishwasher sump 10.

A second water level D2 is defined above the threshold level 20. The volume between the first water level D1 and the second water level D2 is well known, so that a flow rate can be determined by recoding the time T1 and T2 corresponding with the first water level D1 and the second water level D2, respectively.

The threshold value 20 is set relative low, so that the softener rinse water is substantially kept out of the dishwasher sump 10. The threshold value 20 is lower than the second water level D2. Usually the determination of the flow rate has been performed before with clean water.

A method according to the preferred embodiment of the present invention uses a water softener device with the analogue pressure sensor 16.

The water softener device for a dishwasher includes a container filled with a suitable ion exchanger matrix. The container can be passed by incoming mains water. The hardness ions of the mains water are exchanged for alkaline ions. When the exchanger matrix capacity is exhausted after one or more program cycles, then regeneration is preformed by incubating a solution of sodium chloride (NaCl).

The incubation is terminated by rinsing the exchanger matrix with a sufficient amount of mains water in order to flush out surplus solution of sodium chloride and the hardness ions liberated from the exchanger matrix during incubation. After the rinsing water has passed the exchanger matrix, it flows into a dishwasher sump 10. In said dishwasher sump 10 the rinsing water can be detected by the analogue pressure sensor 16.

The method for rinsing uses software. The opening times of the inlet valves are previously recorded by said software. A fix value of the flow rate is preset. The software calculates on the basis of said preset flow rate, when a maximum water amount has passed the exchanger matrix. The preset value of the flow rate corresponds with a preset water hardness, which has been reached.

The proper method for rinsing the softener resin in the dishwasher comprises the following steps.

A saturated solution of sodium chloride is provided in a storage container. A preset volume of the solution of sodium chloride is delivered onto the ion exchanger during a step "drying" of the program cycle.

The rinsing of the ion exchanger is always performed with the same water quantity during the step "drying" of the program cycle.

If the rinsing of the ion exchanger cannot be completely performed within the step "drying" of the program cycle, then the rinsing of the ion exchanger is set forth in the next program cycle according to a special embodiment of the present invention.

The rinsing of the ion exchanger is performed, while the drain pump is switched on. This avoids that any unwanted solution of sodium chloride or hardness ion liberated from the exchanger matrix are accumulated in the sump and the water is contaminated later. Usually the quantities of water are relative small. The drain pump is activated at the beginning of the rinsing of the ion exchanger.

The analogue pressure sensor 16 detects the water level in the dishwasher sump 10, while the rinsing of the ion exchanger is performed. The lowest pressure level of the analogue pressure sensor can be set. When the set lowest pressure level has been exceeded, then the inlet valve for the mains water is closed, but the drain pump continues to run. In general, the inlet valve remains open until a preset rinsing volume has been reached.

The regenerating of the water softener resin, while the inlet valve is open and the drain pump is activated, prevents residuals in the dishwasher. The above method of measuring the amount of the rinsing water can be used, when the inlet valve is open and the drain pump is activated. The above method allows a setting of the amount of water and its limitation to the threshold level 20, maximum uncritical water level.

Interruptions of the rinsing increase the efficiency of the rinsing process. Thereby the amount of rinsing water can be reduced.

The present invention can also be embedded in a computer program product, which comprises all the features enabling the implementation of the methods described herein. Further, when loaded in computer system, said computer program product is able to carry out these methods.

Although illustrative embodiments of the present invention have been described herein, it is to be understood that the present invention is not limited to those precise embodiments, and that various other changes and modifications may be affected therein by one skilled in the art without departing from the scope of the invention. All such changes and modifications are intended to be included within the scope of the invention as defined by the appended claims.

### List of reference numerals

- 10: dishwasher sump
- 12: air trap
- 14: connector
- 16: analogue pressure sensor
- 18: basis level
- 20: threshold level
- 22: diving side wall

- D1: assumed first water level
- D1': detectable first water level
- D2: second water level
- T1: first time
- T2: second time

## Claims

1. A method for regenerating a water softener resin in a dishwasher, comprising
- an incubation step wherein a predetermined volume of a salt solution is led to the softener resin for regeneration thereof, and
- a subsequent rinsing step wherein a predetermined volume of mains water is led over the softener resin, wherein said rinsing step comprises opening an inlet valve for mains water of the dishwasher for a predetermined opening period that is adapted for leading said predetermined volume of mains water over the softener resin,
**characterized in that** said method comprises an initial calibration step for the mains inlet valve wherein said predetermined opening period of the inlet valve is calculated, and wherein the rinsing step comprises measuring the actual opening period of the inlet valve and closing the inlet valve when said predetermined opening period has been reached,
wherein said calibration step is preferably executed previously to said incubation step, wherein said calibration step comprises the subsequent sub-steps of:
- opening the inlet valve,
- detecting a first time (T1') when the water reaches a first predetermined lower water level (D1') within the dishwasher sump (10),
- detecting a subsequent second time (T2) when the water reaches a predetermined second higher water level (D2) within the dishwasher sump (10),
- calculating the flow rate of the mains inlet valve on the basis of the difference between the second time (T2) and the first time (T1) and a known volume between said first water level (D1) and said second water level (D2), and
- calculating said predetermined opening period of the inlet valve during the rinsing step that corresponds to said predetermined volume of rinsing water.

2. The method according to claim 1, wherein the water level within a water-collecting dishwasher sump (10) in the bottom region of a wash chamber of the dishwasher is measured by a pressure sensor and the opening of the inlet valve is interrupted when a predetermined threshold level (20) is reached.

3. The method according to at least one of claims 1 or 2, wherein the rinsing step comprises activating a drain pump of the dishwasher in parallel with the opening of the inlet valve.

4. The method according to claim 2 or 3, wherein during at least part of said rinsing step at least one of the open state of the inlet valve and/or the activity of the drain pump is controlled to keep the liquid level in the dishwasher sump (10) below a predetermined threshold level.

5. The method according to claim 1, wherein at least one, preferably both, of said first water level (D1) and/or said second water level (D2) is detected by a pressure sensor (16).

6. The method according to claim 1 or 5, wherein said threshold level corresponds to said first water level (D1).

7. The method according to claim 6, wherein said first water level (D1) is adapted to keep the water in a lower region of the dishwasher sump (10) such that it is essentially kept outside of the wash chamber of the dishwasher.

8. The method according to at least one of claims 4 to 6, wherein at least at the beginning of the rinsing step the water that is led over the softener resin is drained from the sump essentially without entering the wash chamber.

9. The method according to any of claims 2 to 8, wherein the open state of the inlet valve and/or the activity of the drain pump is controlled on the basis of the signals provided by said pressure sensor (16).

10. The method of at least one of claims 2 to 9, wherein said pressure sensor is at least one pressure switch (16) having a corresponding switch pressure or preferably wherein said pressure sensor is an analogue pressure sensor (16).

11. The method according to claim 8, wherein the inlet valve is closed as soon as the threshold level (20), in particular said first water level (D1, D1') is reached, in particular wherein the activity of the drain pump is continued while the inlet valve is closed.

12. The method according to claim 11, wherein the inlet valve is opened again after the water level in the dishwasher sump (10) has fallen below the threshold level (20).

13. The method according to any of claims 1 to 12, wherein the rinsing is periodically interrupted by closing the inlet valve according to a predetermined time scheme, in particular wherein said time scheme is adapted to allow for the softener resin to restructure during interruption of the rinsing.

14. A computer program product stored on a computer usable medium, comprising computer readable program means for causing a computer to perform the method according to any one of the preceding claims 1 to 13.

15. Dishwasher comprising a program cycle comprising the method according to at least one of claims 1 to 13 and/or a computer usable medium comprising a computer program according to claim 14.

16. Dishwasher according to claim 15 comprising an inlet valve, a drain pump, at least one pressure sensor (16), preferably an analogue pressure sensor (16), and a control unit that is adapted to control the inlet valve and the drain pump during the rinsing step of said method for regenerating the softener resin on the basis of the signals issued by the pressure sensor (16).

## Patentansprüche

1. Verfahren zum Regenerieren eines Wasserenthärtungsharzes in einer Geschirrspülmaschine, umfassend
- einen Inkubationsschritt, wobei ein vorbestimmtes Volumen einer Salzlösung zwecks Regeneration davon zu dem Enthärtungsharz geleitet wird, und
- einen anschließenden Spülschritt, wobei ein vorbestimmtes Volumen Leitungswasser über das Enthärtungsharz geleitet wird, wobei der Spülschritt das Öffnen eines Einlassventils für Leitungswasser der Geschirrspülmaschine für einen vorbestimmten Öffnungszeitraum umfasst, der ausgelegt ist, das vorbestimmte Volumen Leitungswasser über das Enthärtungsharz zu leiten,
**dadurch gekennzeichnet, dass** das Verfahren einen anfänglichen Kalibrierschritt für das Leitungswassereinlassventil umfasst, wobei der vorbestimmte Öffnungszeitraum des Einlassventils berechnet wird und wobei der Spülschritt das Messen des tatsächlichen Öffnungszeitraums des Einlassventils und Schließen des Einlassventils, wenn der vorbestimmte Öffnungszeitraum erreicht wurde, umfasst,
wobei der Kalibrierschritt vorzugsweise vor dem Inkubationsschritt ausgeführt wird, wobei der Kalibrierschritt die aufeinanderfolgenden Unterschritte umfasst:
- Öffnen des Einlassventils,
- Erkennen einer ersten Zeit (T1'), wenn das Wasser einen ersten vorbestimmten niedrigeren Wasserstand (D1') innerhalb der Geschirrspülmaschinenwanne (10) erreicht,
- Erkennen einer anschließenden zweiten Zeit (T2), wenn das Wasser einen zweiten vorbestimmten höheren Wasserstand (D2) innerhalb der Geschirrspülmaschinenwanne (10) erreicht,
- Berechnen der Durchflussrate des Leitungswassereinlassventils auf der Grundlage der Differenz zwischen der zweiten Zeit (T2) und der ersten Zeit (T1) und eines bekannten Volumens zwischen dem ersten Wasserstand (D1) und dem zweiten Wasserstand (D2), und
- Berechnen des vorbestimmten Öffnungszeitraums des Einlassventils während des Spülschrittes, der dem vorbestimmten Volumen Spülwasser entspricht.

2. Verfahren nach Anspruch 1, wobei der Wasserstand innerhalb einer Geschirrspülmaschinen-Wassersammelwanne (10) im Bodenbereich einer Waschklammer der Geschirrspülmaschine von einem Drucksensor gemessen wird und das Öffnen des Einlassventils unterbrochen wird, wenn ein vorbestimmter Schwellenwert (20) erreicht wird.

3. Verfahren nach mindestens einem der Ansprüche 1 oder 2, wobei der Spülschritt das Aktivieren einer Entleerungspumpe der Geschirrspülmaschine parallel zum Öffnen des Einlassventils umfasst.

4. Verfahren nach Anspruch 2 oder 3, wobei während mindestens eines Teils des Spülschrittes mindestens einer des offenen Zustands des Einlassventils und/oder der Aktivität der Entleerungspumpe derart gesteuert wird, dass der Flüssigkeitsstand in der Geschirrspülmaschinenwanne (10) unter einem vorbestimmten Schwellenwert gehalten wird.

5. Verfahren nach Anspruch 1, wobei mindestens einer, vorzugsweise beide des ersten Wasserstands (D1) und/oder des zweiten Wasserstands (D2) von einem Drucksensor (16) erkannt werden.

6. Verfahren nach Anspruch 1 oder 5, wobei der Schwellenwert dem ersten Wasserstand (D1) entspricht.

7. Verfahren nach Anspruch 6, wobei der erste Wasserstand (D1) ausgelegt ist, das Wasser in einem unteren Bereich der Geschirrspülmaschinenwanne (10) derart zu halten, dass es im Wesentlichen außerhalb der Waschkammer der Geschirrspülmaschine gehalten wird.

8. Verfahren nach mindestens einem der Ansprüche 4 bis 6, wobei mindestens zu Beginn des Spülschrittes das Wasser, das über das Enthärtungsharz geleitet wird, aus der Wanne entleert wird, ohne in die Waschkammer einzutreten.

9. Verfahren nach einem der Ansprüche 2 bis 8, wobei der offene Zustand des Einlassventils und/oder die Aktivität der Entleerungspumpe auf der Grundlage der Signale gesteuert werden, die von dem Drucksensor (16) bereitgestellt werden.

10. Verfahren nach mindestens einem der Ansprüche 2 bis 9, wobei der Drucksensor mindestens ein Druckschalter (16) ist, der einen entsprechenden Schaltdruck aufweist, oder wobei der Drucksensor vorzugsweise ein analoger Drucksensor (16) ist.

11. Verfahren nach Anspruch 8, wobei das Einlassventil geschlossen wird, sobald der Schwellenwert (20), insbesondere der erste Wasserstand (D1, D1') erreicht wird, wobei insbesondere die Aktivität der Entleerungspumpe fortgesetzt wird, während das Einlassventil geschlossen wird.

12. Verfahren nach Anspruch 11, wobei das Einlassventil erneut geöffnet wird, nachdem der Wasserstand in der Geschirrspülmaschinenwanne (10) unter den Schwellenwert (20) gefallen ist.

13. Verfahren nach einem der Ansprüche 1 bis 12, wobei das Spülen in regelmäßigen Abständen durch Schließen des Einlassventils gemäß eine vorbestimmten Zeitschema unterbrochen wird, wobei das Zeitschema insbesondere ausgelegt ist, eine Umstrukturierung des Enthärtungsharzes während einer Unterbrechung des Spülens zu ermöglichen.

14. Computerprogrammprodukt, das auf einem computernutzbaren Medium gespeichert ist, umfassend computerlesbare Programmmittel, um zu veranlassen, dass ein Computer das Verfahren nach einem der vorhergehenden Ansprüche 1 bis 13 ausführt.

15. Geschirrspülmaschine, umfassend einen Programmzyklus, der das Verfahren nach mindestens einem der Ansprüche 1 bis 13 umfasst, und/oder ein computernutzbares Medium, das ein Computerprogramm nach Anspruch 14 umfasst.

16. Geschirrspülmaschine nach Anspruch 15, umfassend ein Einlassventil, eine Entleerungspumpe, mindestens einen Drucksensor (16), vorzugsweise einen analogen Drucksensor (16) und eine Steuereinheit, die ausgelegt ist, das Einlassventil und die Entleerungspumpe während des Spülschrittes des Verfahrens zum Regenerieren des Enthärtungsharzes auf Grundlage der Signale zu steuern, die von dem Drucksensor (16) ausgegeben werden.

## Revendications

1. Procédé de régénération d'une résine d'adoucissement d'eau dans un lave-vaisselle, comprenant :
- une étape d'incubation dans laquelle un volume prédéterminé d'une solution saline est amené vers la résine d'adoucissement pour sa régénération ; et
- une étape de rinçage ultérieure dans laquelle un volume prédéterminé d'eau de conduite est amené sur la résine d'adoucissement, ladite étape de rinçage consistant à ouvrir un robinet d'entrée pour l'eau de conduite du lave-vaisselle pendant une période d'ouverture prédéterminée permettant d'amener ledit volume prédéterminé d'eau de conduite sur la résine d'adoucissement ;
ledit procédé étant **caractérisé en ce qu'**il comprend une étape initiale d'étalonnage du robinet d'entrée d'eau de conduite, au cours de laquelle ladite période d'ouverture prédéterminée du robinet d'entrée est calculée, et **en ce que** l'étape de rinçage consiste à mesurer la période d'ouverture réelle du robinet d'entrée et à fermer le robinet d'entrée quand ladite période d'ouverture prédéterminée a été atteinte ;
ladite étape d'étalonnage étant de préférence exécutée avant ladite étape d'incubation, ladite étape d'étalonnage comprenant les sous-étapes ultérieures consistant à :
- ouvrir le robinet d'entrée ;
- détecter un premier temps (Tl') quand l'eau atteint un premier niveau d'eau bas prédéterminé (D1') dans un bac de lave-vaisselle (10) ;
- détecter un second temps ultérieur (T2) quand l'eau atteint un second niveau d'eau haut prédéterminé (D2) dans le bac de lave-vaisselle (10) ;
- calculer le débit du robinet d'entrée d'eau de conduite sur la base de la différence entre le second temps (T2) et le premier temps (T1), et d'un volume connu entre ledit premier niveau d'eau (D1) et ledit second niveau d'eau (D2) ; et
- calculer ladite période d'ouverture prédéterminée du robinet d'entrée pendant l'étape de rinçage qui correspond audit volume prédéterminé d'eau de rinçage.

2. Procédé selon la revendication 1, dans lequel le niveau d'eau dans un bac de lave-vaisselle de collecte d'eau (10) dans la partie inférieure d'une chambre de lavage du lave-vaisselle est mesuré par un capteur de pression, et l'ouverture du robinet d'entrée est interrompue quand un niveau de seuil prédéterminé (20) est atteint.

3. Procédé selon au moins l'une des revendications 1 et 2, dans lequel l'étape de rinçage consiste à activer une pompe d'évacuation du lave-vaisselle parallèlement à l'ouverture du robinet d'entrée.

4. Procédé selon la revendication 2 ou 3, dans lequel pendant au moins une partie de ladite étape de rinçage, l'état ouvert du robinet d'entrée et/ou l'activité de la pompe d'évacuation sont contrôlés afin de maintenir le niveau de liquide dans le bac de lave-vaisselle (10) au-dessous d'un niveau de seuil prédéterminé.

5. Procédé selon la revendication 1, dans lequel au moins un niveau d'eau, de préférence les deux, parmi ledit premier niveau d'eau (D1) et ledit second niveau d'eau (D2) est détecté par un capteur de pression (16).

6. Procédé selon la revendication 1 ou 5, dans lequel ledit niveau de seuil correspond audit premier niveau d'eau (D1).

7. Procédé selon la revendication 6, dans lequel ledit premier niveau d'eau (D1) permet de maintenir l'eau dans une partie inférieure du bac de lave-vaisselle (10) de manière à ce qu'elle soit essentiellement maintenue à l'extérieur de la chambre de lavage du lave-vaisselle.

8. Procédé selon au moins l'une des revendications 4 à 6, dans lequel au moins au début de l'étape de rinçage, l'eau qui est amenée sur la résine d'adoucissement est évacuée du bac essentiellement sans entrer dans la chambre de lavage.

9. Procédé selon l'une quelconque des revendications 2 à 8, dans lequel l'état ouvert du robinet d'entrée et/ou l'activité de la pompe d'évacuation sont contrôlés sur la base des signaux fournis par ledit capteur de pression (16).

10. Procédé selon au moins l'une des revendications 2 à 9, dans lequel ledit capteur de pression est au moins un pressostat (16) ayant une pression de commutation correspondante ou de préférence dans lequel ledit capteur de pression est un capteur de pression analogique (16).

11. Procédé selon la revendication 8, dans lequel le robinet d'entrée est fermé dès que le niveau de seuil (20), en particulier ledit premier niveau d'eau (D1, Dl'), est atteint, en particulier dans lequel l'activité de la pompe d'évacuation est continue quand le robinet d'entrée est fermé.

12. Procédé selon la revendication 11, dans lequel le robinet d'entrée est de nouveau ouvert après que le niveau d'eau dans le bac de lave-vaisselle (10) aura chuté au-dessous du niveau de seuil (20).

13. Procédé selon l'une quelconque des revendications 1 à 12, dans lequel le rinçage est périodiquement interrompu en fermant le robinet d'entrée selon un schéma temporel prédéterminé, en particulier dans lequel ledit schéma temporel permet à la résine d'adoucissement de se restructurer pendant l'interruption du rinçage.

14. Produit de programme informatique stocké sur un support utilisable par ordinateur, comprenant un moyen de programme lisible par ordinateur amenant un ordinateur à exécuter le procédé selon l'une quelconque des revendications 1 à 13 précédentes.

15. Lave-vaisselle comprenant un cycle de programme comprenant le procédé selon au moins l'une des revendications 1 à 13 et/ou un support utilisable par ordinateur comprenant un programme informatique selon la revendication 14.

16. Lave-vaisselle selon la revendication 15, comprenant un robinet d'entrée, une pompe d'évacuation, au moins un capteur de pression (16), de préférence un capteur de pression analogique (16), et une unité de contrôle conçue pour contrôler le robinet d'entrée et la pompe d'évacuation pendant l'étape de rinçage dudit procédé de régénération de la résine d'adoucissement sur la base des signaux émis par le capteur de pression (16).
